# EUROPEAN PATENT APPLICATION

(11) **EP 4 545 597 A1**
(43) Date of publication of application: **30.04.2025**
(21) Application number: 23827121.7
(22) Date of filing: 16.06.2023
(51) Int. Cl.: C08L 23/16, C08K 3/04, C08K 5/01, C08K 5/14, H01M 8/0284, H01M 8/10

(54) **RUBBER COMPOSITION**

(30) Priority: 22.06.2022 JP 2022100107
(71) Applicant: NOK Corporation, Minato-ku Tokyo 105-8585 (JP)
(72) Inventor: HORIKAWA Takafumi, Fujisawa-shi, Kanagawa 251-0042 (JP); SUZUKI Akihiro, Fujisawa-shi, Kanagawa 251-0042 (JP)
(74) Representative: Kraus & Lederer PartGmbB
(86) International application number: PCT/JP2023/022350
(87) International publication number: WO 2023/248936

(57) **Abstract**

A rubber composition comprising, based on 100 parts by weight of (A) a copolymer rubber polymer comprising at least one of ethylene-butene-non-conjugated diene terpolymer rubber, ethylene-propylene-non-conjugated diene terpolymer rubber, and ethylene-propylene copolymer rubber, 35 to 55 parts by weight of (B) carbon black having an iodine adsorption of 10 to 25 mg/g and a DBP oil absorption of 30 to 140 ml/100 g, 5 to 23 parts by weight of (C) a linear hydrocarbon-based softener having a kinematic viscosity at 40°C of 8 to 500 mm²/sec and a pour point of -30°C or less, and 0.5 to 10 parts by weight of (D) an organic peroxide. The rubber composition that gives a vulcanizate having resistance in a wide temperature range from low to high temperatures, and that can sufficiently satisfy functions required as sealing materials when used as a sealing material, for example, a sealing material for fuel cell separators.

## Description

### TECHNICAL FIELD

The present invention relates to a rubber composition. More particularly, the present invention relates to a rubber composition that can be suitably used as, for example, a molding material for sealing for fuel cell separators.

### BACKGROUND ART

Fuel cells have excellent characteristics, such as almost no need to use fossil fuels, for which exhaustion of resources has to be taken into consideration, almost no noise during power generation, and higher energy recovery rate than other energy power generation mechanisms. And thus, they have been put into practical use in many ways.

In particular, polymer electrolyte fuel cells (PEFCs) are operated at a lower temperature compared with other types of fuel cells; thus, regarding the parts constituting the cells, there is no concern for corrosion in terms of materials. In addition, PEFCs can discharge relatively higher current, although they are operated at a low temperature. PEFCs have attracted attentions, not only for home cogeneration, but also as alternative power sources for internal combustion engines mounted in vehicles.

Of the parts constituting PEFCs, a separator generally has a plurality of parallel grooves formed on both sides or one side of a flat plate, and plays the role to transmit electricity generated in the gas diffusion electrode in the fuel cell to the outside, to drain water generated in the process of power generation to the grooves, and to secure the grooves as the flow passage of the reactant gas flowing into the fuel cell.

Separators for fuel cells having grooves that play such a role are required to be downsized. Further, since many separators are stacked for use, there is a demand for sealing materials for separators that have excellent durability and that can be used for a long period of time.

Moreover, the electrolyte membrane of PEFCs is made of a polymer membrane, such as a polytetrafluororesin membrane having a perfluorosulfonic side chain group. When crosslinking is performed while the sealing material is arranged in the vicinity of the electrolyte membrane, it is necessary to be careful so that the electrolyte membrane is not degraded by being heated during crosslinking. That is, as the sealing material for fuel cells, those that can be crosslinked at a lower temperature and for a shorter period of time are preferable.

As such sealing materials for separators, for example, those using EPDM have been proposed.

Patent Document 1 discloses, as an adhesive sealing material for fuel cells crosslinkable at a low temperature and having high sealing properties and adhesion reliability, one comprising a crosslinked product of a rubber composition comprising (A) EPDM, (B) an organic peroxide crosslinking agent having a one-hour half-life temperature of 130°C or less, (C) a crosslinking aid, and (D) an adhesive component that is a resorcinol compound - a melamine-based compound, or a silane coupling agent. Comparative Example 4 indicates that when the adhesion component (D) is not contained, inferior results are obtained in a 90° peel test and a T type peel test (initial stage, 100 hours and 1000 hours after dipping in 90°C warm water).

Further, Patent Document 2 indicates that the rubber composition disclosed in Patent Document 1 is further compounded with 5 to 30 parts by weight of ethylene-α-olefin copolymer based on 100 parts by weight of EPDM. Examples of α-olefins include α-olefins having 3 to 10 carbon atoms, such as propylene, butene-1, pentene-1, hexene-1, 4-methylpentene-1, heptene-1, octene-1, nonene-1, and decene-1. An aluminate-based coupling agent is also described as the above component (D).

According to the description of the Example using an ethylene-octene-1 copolymer, whose α-olefin is octene-1, tensile strength, elongation at break, 90° peel strength, and volume resistivity (insulation) are high, and the compounding effect of the ethylene-α-olefin copolymer is emphasized.

However, as one of the problems of fuel cell vehicles, design and control are required so as to avoid situations in which the vehicles cannot be operated due to freezing of FC stacks and system components in any of the following cases: at the time of start under low temperature conditions, during running under low temperature conditions, and at the time of being left at a temperature below the freezing point after running. Sealing materials are also required to have cold resistance; however, the cold resistance of EPDM is not considered to be sufficient.

In order to improve the low temperature properties of EPDM, means to improvement in terms of formulation by adding a plasticizer, such as oil, thus keeping a rubber-like state even at a low temperature is well known. However, in such a case, other problems, such as reduced rubber strength, reduced rubber elasticity, kneading properties, dispersibility, and bleed resistance have been newly found. For this type of use, it is also important to serve as a sealing material for separators. And for the purpose of improving low temperature sealing properties in addition to ensuring the necessary functions, rubber compositions comprising 1 to 10 parts by weight of an organic peroxide crosslinking agent with a specified 1 hour half-life temperature based on 100 parts by weight of an ethylene-butene-non-conjugated diene copolymer have been proposed (Patent Documents 3 to 5). Vulcanized molded articles of such rubber compositions satisfy low temperature sealing properties; however, further improvement is required for their sealing properties in a high temperature region.

### PRIOR ART DOCUMENTS

### PATENT DOCUMENTS

Patent Document 1 : JP-A-2009-94056
Patent Document 2 : JP-A-2011-249283
Patent Document 3 :WO 2019/003884 A1
Patent Document 4 : JP-A-2017-183162
Patent Document 5 : JP-A-2021-086791
Patent Document 6 : JP-A-2011-213822

### OUTLINE OF THE INVENTION

### PROBLEM TO BE SOLVED BY THE INVENTION

The present invention was made in view of the above problem, and an object of the present invention is to provide a rubber composition that gives a vulcanizate having resistance in a wide temperature range from low to high temperatures, and that can sufficiently satisfy functions required as sealing materials when used as a sealing material, for example, a sealing material for fuel cell separators.

### MEANS FOR SOLVING THE PROBLEM

The above object of the present invention can be achieved by a rubber composition comprising, based on 100 parts by weight of (A) a copolymer rubber polymer comprising at least one of ethylene-butene-non-conjugated diene terpolymer rubber, ethylene-propylene-non-conjugated diene terpolymer rubber, and ethylene-propylene copolymer rubber, 35 to 55 parts by weight of (B) carbon black having an iodine adsorption of 10 to 25 mg/g and a DBP oil absorption of 30 to 140 ml/100 g, 5 to 23 parts by weight of (C) a linear hydrocarbon-based softener having a kinematic viscosity at 40°C of 8 to 500 mm²/sec and a pour point of - 30°C or less, and 0.5 to 10 parts by weight of (D) an organic peroxide.

### EFFECT OF THE INVENTION

For example, seal members for fuel cells are required to satisfy both high elongation and compression set characteristics, which are incompatible physical properties; however, in the rubber composition according to the present invention, the particle size and structure size of carbon black are optimized, whereby it is possible to satisfy both of these physical properties. That is, by compounding a predetermined amount of carbon black having a specific iodine adsorption and a specific DBP oil absorption, the resulting vulcanized molded product has excellent effects that it has excellent compression set characteristics, which lead to longer lifespan, in a wide temperature range from low to high temperatures, while ensuring compression cracking resistance (high elongation).

### EMBODIMENTS FOR CARRYING OUT THE INVENTION

As the polymer, for the purpose of balancing heat resistance, cold resistance, durability, temperature dependence of spring constant, and repulsive stress, a polymer composed of at least one member selected from the group consisting of EBDM (an ethylene/butene/non-conjugated diene terpolymer), EPDM (an ethylene/propylene/non-conjugated diene terpolymer), and EPM (an ethylene/propylene copolymer) is used. That is, any one of EBDM, EPDM, and EPM may be used singly, or they may be blended for use. Preferably, a blend of EBDM and EPDM is used, and a copolymer rubber polymer blended at a ratio of 70 wt.% or more of EBDM in the total amount of EBDM and EPDM is used. Each copolymer rubber polymer is typically solid.

Further, the ethylene content in the copolymer rubber polymer is preferably 40 to 60 wt.%. If the ethylene content ratio is less than this range, rubber physical properties are reduced, and it may be difficult to satisfy elongation and tensile properties, which are required for seal members. In contrast, if the ethylene content ratio is greater than this range, low temperature properties tend to deteriorate. In addition, from the viewpoint of acid resistance and water resistance in the fuel cell operating environment, an EPDM polymer is preferably used. From the viewpoint of low temperature sealing properties, an EBDM polymer is preferably used.

EBDM has a copolymerization composition comprising 30 to 95 wt.%, preferably 40 to 95 wt.%, of a structural unit derived from ethylene, 4.9 to 49.9 wt.%, preferably 4.9 to 35 wt.%, of a structural unit derived from butene, and 0.1 to 20 wt.%, preferably 1 to 15 wt.%, of a structural unit derived from non-conjugated diene, and is synthesized using a metallocene-based compound, such as (tert-butylamido)dimethyl(η⁵-2-methyl-s-indacen-1-yl)silanetitanium(II)1,3-pentadine, as a polymerization catalyst.

The EBDM is described, for example, in Patent Document 6. As the butene, mainly butene-1 is used. Further, as the non-conjugated diene, cyclic or chain non-conjugated dienes, such as 5-ethylidene-2-norbornene and 5-vinyl-2-norbornene, can be used; preferably a cyclic non-conjugated diene is used. From the viewpoint of low temperature settling, EBDM with about 1 to 20 wt.%, preferably about 3 to 15 wt.%, of such a non-conjugated diene is used. In practice, commercial products, such as EBT produced by Mitsui Chemicals, Inc., can be used as they are.

An ethylene-propylene-non-conjugated diene terpolymer rubber polymer is used as EPDM. As the non-conjugated diene, a small amount of dicyclopentadiene, 1,4-hexadiene, dicyclooctadiene, methylene norbornene, vinyl norbornene, ethylidene norbornene, or the like is copolymerized. The Mooney viscosity ML₁₊₄ (125°C) thereof is about 25 to 80, preferably about 25 to 70. An ethylene-propylene copolymer rubber polymer is used as EPM.

Such a copolymer rubber polymer is compounded with carbon black, a linear hydrocarbon-based softener, and an organic peroxide to constitute a rubber composition. If a bifunctional (meth)acrylate monomer, which is used as an essential component in Patent Document 5, is used, elongation at high temperature may be deteriorated, as shown in the Reference Example provided later.

As the carbon black, one having an iodine adsorption of 10 to 25 mg/g, preferably 10 to 20 mg/g, and a DBP oil absorption of 30 to 140 ml/100 g, preferably 30 to 110 ml/100 g, is used at a ratio of 35 to 55 parts by weight, preferably 40 to 55 parts by weight based on 100 parts by weight of the copolymer rubber polymer.

Here, the iodine adsorption and DBP oil absorption are typical indicators showing the characteristics of carbon black. The iodine adsorption is a value measured according to JIS K6221 corresponding to ISO 1304, and the DBP oil absorption is a value measured according to JIS K6221 corresponding to ISO 4656 Method A (mechanical method), respectively.

The iodine adsorption is an indicator of the total specific surface area including the pores of carbon black. Further, the DBP oil absorption indirectly quantifies the structure by measuring the porosity between the individual aggregates that have a positive correlation with the structure.

If carbon black having an iodine adsorption less than this range is used, a large amount of carbon black must be compounded in order to ensure reaction force for sealing due to the increase in hardness. As a result, compressive strain is degraded. In contrast, if carbon black having an iodine adsorption greater than this range is used, or if carbon black having a DBP oil absorption outside this range is used, sealing properties under high temperature conditions are reduced.

Moreover, if carbon black is used at a ratio outside this range, sealing properties under high temperature conditions are also reduced.

As the linear hydrocarbon-based softener, a linear hydrocarbon-based softener having a kinematic viscosity at 40°C of 8 to 500 mm²/sec and a pour point of -30°C or less from the viewpoint of volatility, preferably a liquid poly α-olefin oligomer, is used at a ratio of about 5 to 23 parts by weight, preferably about 10 to 21 parts by weight, based on 100 parts by weight of the copolymer rubber polymer. For this, for example, commercially available products DURASYN 170 (produced by INEOS Singapore Pte. Ltd.), Diana Process Oil PW-380 (produced by Idemitsu Kosan Co., Ltd.), and the like can be used as they are. The kinematic viscosity as mentioned herein is measured according to JIS K2283 corresponding to ISO 2909 and ISO 3104. By compounding a linear hydrocarbon-based softener, kneading properties, suppression of bleed out, compression cracking resistance in a wide temperature range from low to high temperatures, and low settling are improved. If such a softener is used at a ratio greater than this range, compression set characteristics at a low temperature, for example, - 30°C, are deteriorated. In contrast, if such a softener is used at a ratio less than this range, elongation at high temperature is reduced.

Usable examples of organic peroxide include dicumyl peroxide, 2,5-dimethyl-2,5-di(tert-butylperoxy)hexane, 2,5-dimethyl-2,5-di(tert-butylperoxy)hexyne-3, 2,5-dimethyl-2,5-di(benzoylperoxy)hexane, di-tert-butyl peroxide, di-tert-butylperoxy-3,3,5-trimethylcyclohexane, tert-butyl hydroperoxide, and the like. Preferably organic peroxide having a one-hour half-life temperature of 110 to 130°C are used.
The term "one-hour half-life temperature" used herein refers to, in a half-life temperature that is an indicator indicating the decomposition temperature of the organic peroxide, a temperature, in which the half-life becomes 1 hour. As the one-hour half-life temperature is lower, the organic peroxide is decomposed at a lower temperature.

As the above organic peroxide having the one-hour half-life temperature, peroxyketal or peroxyester, preferably peroxyketal, which has a one-hour half-life temperature of 110 to 130°C, is used.

Examples of peroxyketal include n-butyl-4,4-di(t-butylperoxy)valerate, 2,2-di(t-butylperoxy)butane, 2,2-di[4,4-bis(t-butylperoxy)cyclohexyl]propane, 1,1-di(t-butylperoxy)cyclohexane, di(3,5,5-trimethylhexanoyl)peroxide, 1,1-di(t-hexylperoxy)cyclohexane, 1,1-di(t-hexylperoxy)-3,3,5-trimethylcyclohexane, 1,1-di(t-butylperoxy)-2-methylcyclohexane, and the like, are used.

Further, usable examples of peroxyester include t-butyl peroxybenzoate, t-butyl peroxyacetate, t-hexyl peroxybenzoate, t-butyl peroxy-2-ethylhexyl monocarbonate, t-butyl peroxylaurate, t-butyl peroxyisopropyl monocarbonate, t-butyl peroxy-3,5,5-trimethylhexanoate, t-butyl peroxymaleic acid, t-hexyl peroxyisopropyl monocarbonate, and the like.

Regarding the amount of the crosslinking agent to be compounded, it can be added at a ratio of 0.5 to 10 parts by weight, preferably 4.5 to 8.5 parts by weight,-based on 100 parts by weight of the copolymer rubber polymer. Within the above range, foaming during vulcanization can be prevented to allow molding. In addition, since the crosslink density is good, products having sufficient physical properties become easy to be obtained.

Further, a crosslinking accelerator may be contained, if necessary. As the crosslinking accelerator, triallyl isocyanurate, triallyl cyanurate, liquid polybutadiene, N,N'-m-phenylenedimaleimide, trimethylolpropane trimethacrylate, and the like can be used. By adding an appropriate amount of crosslinking accelerator, the crosslinking efficiency can be improved, and the heat resistance and mechanical properties can also be improved.

In addition to the above components, the rubber composition may contain, if necessary, compounding agents generally used in the rubber industry, such as antioxidants, vulcanization aid and acid acceptors, as rubber compounding agents.

Examples of the antioxidants include polymerized 2,2,4-trimethyl-1,2-dihydroquinoline, 2-mercaptobenzimidazole, and the like, examples of the vulcanization aid include stearic acid, and the like, examples of the acid acceptor include an oxide or hydroxide of a divalent metal, hydrotalcite, and the like, are used.

The rubber composition can be prepared by kneading various materials using a kneading machine, such as a single-screw extruder, a twin-screw extruder, a roll, a Banbury mixer, a kneader, or a high shear mixer.

The vulcanization molding thereof is carried out by primary vulcanization performed at about 150 to 230°C for about 0.5 to 30 minutes and oven vulcanization (secondary vulcanization) optionally performed at about 150 to 250°C for about 0.5 to 24 hours.

### EXAMPLES

Next, the present invention will be described in detail with reference to Examples. The present invention, including its effects, is not limited to the Examples.

### Example 1

| | |
|---|---|
| EBDM copolymer (EBT K-9330M, produced by Mitsui Chemicals, Inc.) | 75 parts by weight |
| EPDM copolymer (EP27, produced by JSR) | 25 parts by weight |
| SRF carbon black (Asahi #50HG, produced by Asahi Carbon Co., Ltd.; iodine adsorption: 19 mg/g; DBP oil absorption: 110 ml/100 g) | 50 parts by weight |
| Softener (DURASYN 170, produced by INEOS Singapore Pte Ltd.; C₁₀-derived poly α-olefin, kinematic viscosity@ 40°C: 65.1 mm²/sec, @ 100°C: 9.8 mm²/sec, pour point: -45°C) | 20 parts by weight |
| 1,2-polybutadiene (NISSO-PB B-3000, produced by Nippon Soda Co., Ltd.) | 2 parts by weight |
| Amine-based antioxidant (Nocrac 224S, produced by | 1 part by weight |
| Ouchi Shinko Chemical Industrial Co., Ltd.) | |
| Peroxyketal (Perhexa C, produced by NOF Corporation; purity: 70%, 1,1-di(tert-butylperoxy)cyclohexane, one-hour half-life temperature: 111°C) | 7.1 parts by weight |

The above components were kneaded with a kneader and an open roll. The kneaded product was vulcanized at 180°C for 10 minutes, followed by oven vulcanization (secondary vulcanization) at 150°C for 24 hours, thereby producing a sample sheet with a thickness of 2 mm.

The obtained vulcanizate was measured and evaluated for the characteristics of the following various items.

Elongation test at high temperature:
According to JIS K-6251 corresponding to ISO 37, a sample sheet was used to measure elongation at 95°C.

An elongation of 120% or more was evaluated as ○, and 119% or less as ×.

High temperature compression set:
According to JIS K-6262 corresponding to ISO 815-1, three laminated sample sheets were used and left in the air at 130°C for 24 hours, followed by measurement.

A compression set of 5% or less was evaluated as ⊚, 6% or more and
10% or less as O, and 11% or more as ×.

Low temperature compression set:
According to JIS K-6262 corresponding to ISO 815-1, three laminated sample sheets were used and left in the air at -30°C for 24 hours, followed by measurement.

A compression set of 30% or less was evaluated as ⊚, 31% or more and
40% or less as ○, and 41% or more as ×.

Low temperature elastic recovery test:
According to JIS K-6261 corresponding to ISO 2921, a TR-10 value and a TR-70were measured.

A TR-10 value of -40°C or less was evaluated as O, and -39°C or more as ×.
A TR-70 value of -60°C or less was evaluated as ○, and -59°C or more as ×.

### Example 2

In Example 1, the same amount (50 parts by weight) of MT carbon black (Termax LSR N990, produced by Cancarb Limited.; iodine adsorption: 10 mg/g; DBP oil absorption: 38 ml/100 g) was used as carbon black.

### Comparative Example 1

In Example 1, the same amount (50 parts by weight) of FT carbon black (Seast TA, produced by Tokai Carbon Co., Ltd.; iodine adsorption: 18 mg/g; DBP oil absorption: 19 ml/100 g) was used as carbon black.

### Comparative Example 2

In Example 1, the same amount (50 parts by weight) of FEF carbon black (Showblack N550, produced by Showa Cabot K. K.; iodine adsorption: 44 mg/g; DBP oil absorption: 115 ml/100 g) was used as carbon black.

### Comparative Example 3

In Example 1, the same amount (50 parts by weight) of SRF carbon black (Seast G-SVH, produced by Tokai Carbon Co., Ltd.; iodine adsorption: 30 mg/g; DBP oil absorption: 140 ml/100 g) was used as carbon black.

### Comparative Example 4

In Example 1, the same amount (50 parts by weight) of SRF carbon black (Seast GS, produced by Tokai Carbon Co., Ltd.; iodine adsorption: 26 mg/g; DBP oil absorption: 68 ml/100 g) was used as carbon black.

### Example 3

In Example 1, the amount of carbon black was changed to 40 parts by weight.

### Comparative Example 5

In Example 1, the amount of carbon black was changed to 30 parts by weight.

### Comparative Example 6

In Example 1, the amount of carbon black was changed to 60 parts by weight.

### Comparative Example 7

In Example 1, the amount of carbon black was changed to 70 parts by weight.

### Example 4

In Example 2, the amount of softener was changed to 10 parts by weight.

### Example 5

In Example 2, the amount of softener was changed to 22 parts by weight.

### Comparative Example 8

In Example 2, the amount of softener was changed to 24 parts by weight.

### Reference Example

In Example 1, 2.5 parts by weight of a bifunctional acrylate monomer, 1,6-bis(acryloyloxy)hexane, was further used.

The results obtained in the foregoing Examples, Comparative Examples, and Reference Example are shown in the following Tables 1 to 2.

**Table 1**

| Evaluation · Measurement item | | Ex. 1 | Ex. 2 | Comp. Ex. 1 | Comp. Ex. 2 | Comp. Ex. 3 | Comp. Ex. 4 |
|---|---|---|---|---|---|---|---|
| Elongation at high temperature | (%) | 130 | 130 | 99 | 105 | 110 | 115 |
| Evaluation | | ○ | ○ | × | × | × | × |
| High temperature compression set | (%) | 4.0 | 8.5 | 6.2 | 6.6 | 4.8 | 5.5 |
| Evaluation | | ⊚ | ○ | ○ | ○ | ⊚ | ○ |
| Low temperature compression set | (%) | 26.9 | 27.9 | 28.7 | 27.4 | 23.5 | 28.1 |
| Evaluation | | ⊚ | ⊚ | ⊚ | ⊚ | ⊚ | ⊚ |
| TR-10 value | (°C) | -60 | -61 | -61 | -61 | -61 | -61 |
| Evaluation | | ○ | ○ | ○ | ○ | ○ | ○ |
| TR-70 value | (°C) | -42 | -42 | -42 | -42 | -43 | -43 |
| Evaluation | | ○ | ○ | ○ | ○ | ○ | ○ |

**Table 2**

| Evaluation · Measurement item | | Ex. 3 | Comp. Ex. 5 | Comp. Ex. 6 | Comp. Ex. 7 | Ex. 4 | Ex. 5 | Comp. Ex. 8 | Ref Ex. |
|---|---|---|---|---|---|---|---|---|---|
| Elongation at high temperature | (%) | 120 | 109 | 111 | 92 | 121 | 132 | 136 | 92 |
| Evaluation | | ○ | × | × | × | ○ | ○ | ○ | × |
| High temperature compression set | (%) | 3.3 | 3.0 | 4.1 | 3.7 | 5.0 | 9.8 | 11.8 | 3.8 |
| Evaluation | | ⊚ | ⊚ | ⊚ | ⊚ | ⊚ | ○ | ○ | ⊚ |
| Low temperature compression set | (%) | 28.2 | 28.5 | 24.3 | 18.9 | 26.6 | 29.0 | 33.0 | 24.1 |
| Evaluation | | ⊚ | ⊚ | ⊚ | ⊚ | ⊚ | ○ | × | ⊚ |
| TR-10 value | (°C) | -61 | -61 | -60 | -60 | -60 | -61 | -62 | -60 |
| Evaluation | | ○ | ○ | ○ | ○ | ○ | ○ | ○ | ○ |
| TR-70 value | (°C) | -42 | -42 | -42 | -43 | -40 | -42 | -42 | -41 |
| Evaluation | | ○ | ○ | ○ | ○ | ○ | ○ | ○ | ○ |

### INDUSTRIAL APPLICABILITY

The rubber composition of the present invention has excellent compression set characteristics, which lead to longer lifespan, in a wide temperature range from low to high temperatures, while ensuring compression cracking resistance (high elongation). Therefore, the rubber composition of the present invention is effectively used as a sealing material, for example, a sealing material for fuel cell separators.

## Claims

1. A rubber composition comprising, based on 100 parts by weight of (A) a copolymer rubber polymer comprising at least one of ethylene-butene-non-conjugated diene terpolymer rubber (EBDM), ethylene-propylene-non-conjugated diene terpolymer rubber (EPDM), and ethylene-propylene copolymer rubber (EPM), 35 to 55 parts by weight of (B) carbon black having an iodine adsorption of 10 to 25 mg/g and a DBP oil absorption of 30 to 140 ml/100 g, 5 to 23 parts by weight of (C) a linear hydrocarbon-based softener having a kinematic viscosity at 40°C of 8 to 500 mm²/sec and a pour point of -30°C or less, and 0.5 to 10 parts by weight of (D) an organic peroxide.

2. The rubber composition according to claim 1, wherein a blend of EBDM and EPDM is used, and a copolymer rubber polymer blended at a ratio of 70 wt.% or more of EBDM in the total amount of EBDM and EPDM is used.

3. The rubber composition according to claim 1, wherein (C) a linear hydrocarbon-based softener having a kinematic viscosity at 40°C of 8 to 500 mm²/sec and a pour point of - 30°C or less is a liquid poly α-olefin oligomer.

4. The rubber composition according to claim 1, wherein (D) an organic peroxide is an organic peroxide, which has a one-hour half-life temperature of 110 to 130°C.

5. The rubber composition according to claim 1, which is used as a molding material for sealing material.

6. The sealing material comprising a vulcanized molded product of the rubber composition according to claim 5.

7. The sealing material according to claim 6, which is used as a sealing material for fuel cell separators.
